(19) Europäisches Patentamt
European Patent Office
Office européen des brevets

(11) **EP 2 879 325 A1**

(12) **EUROPEAN PATENT APPLICATION**

(43) Date of publication:
**03.06.2015 Bulletin 2015/23**

(51) Int Cl.:
*H04L 9/30* $^{(2006.01)}$     *H04L 9/00* $^{(2006.01)}$

(21) Application number: **13306642.3**

(22) Date of filing: **29.11.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Thomson Licensing**
**92130 Issy-les-Moulineaux (FR)**
• **Ecole Normale Supérieure**
**75230 Paris Cedex 05 (FR)**

(72) Inventors:
• **Ben Hamouda, Fabrice**
**75230 Paris Cedex 05 (FR)**
• **Joye, Marc**
**35576 Cesson Sévigné Cedex (FR)**
• **Libert, Benôit**
**35576 Cesson Sévigné cedex (FR)**

(74) Representative: **Huchet, Anne**
**Technicolor**
**1, rue Jeanne d'Arc**
**92443 Issy-les-Moulineaux Cedex (FR)**

(54) **Method for determining a statistic value on data based on encrypted data**

(57) In one embodiment, it is proposed a method for determining a statistic value, for a given time period $t$, on a set of $n \geq 2$ of plaintext data $\{x_{i,t}\}_{1 \leq i \leq n}$ with $x_{i,t} \in \mathbb{Z}_p$, $p$ being a primer number, only based on a set of corresponding ciphertext data $\{c_{i,t} = E_{sk_i}(x_{i,t}, t)\}_{1 \leq i \leq n}$, where E is an encryption method and $sk_i$ an encryption key, without having access to all elements of the set of corresponding encryption key $\{sk_i\}_{1 \leq i \leq n}$. The method is implemented by an electronic device and is remarkable in that it comprises :

- a step of obtaining said given time period $t$, and said set of corresponding ciphertext data $\{c_{i,t} = E_{sk_i}(x_{i,t}, t)_{1 \leq i \leq n}$ for which

$E_{sk_i}(x_{i,t}, t) = f(x_{i,t}) \prod_{j=1}^{k+1} H_j(t)^{s_{j,i}}$ where functions $H_1, ..., H_{k+1}: \mathbb{Z} \to \mathbb{G}$ are hash functions, $\mathbb{G}$ is a group of prime order q, $k \geq 1$ and said encryption key $sk_i = \{s_{j,i}\}_{1 \leq j \leq k+1}$ which comprises (k + 1) random elements in $\mathbb{Z} / q\mathbb{Z}$, and f is a function defined according to said statistic value, and having for codomain said group $\mathbb{G}$ ;

- a step of obtaining an aggregator private key $sk_0 = \{s_{j,0}\}_{1 \leq j \leq k+1} = \left\{ -\sum_{i=1}^{n} s_{j,i} \ mod \ q \right\}_{1 \leq j \leq k+1}$ ;

- a step of determining said statistic value based on $sk_0$ and said set of corresponding ciphertext data $\{c_{i,t} = E_{sk_i}(x_{i,t}, t)\}_{1 \leq i \leq n}$.

EP 2 879 325 A1

**Description**

Field of the invention

The invention relates to cryptography, and more specifically to the determination of aggregate data statistics for time-series data.

Background of the invention

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Generally, data aggregator systems enable to collect information/data associated to users and then perform some data mining operations on these data in order to obtain relevant information (such as statistics of views of a film for example in the case the data aggregator system is a service provider). However, in the case where the users don't trust the data aggregator and therefore do not want the data aggregator to obtain specific information (i.e. guarantee the privacy of these data), the following issue has to be overcome: *"How can an untrusted data aggregator system obtain some statistics, for a given period, based on the exploitation of encrypted data without having access to users'decryption keys?"*

Such issue is solved by a technique called an aggregator oblivious encryption scheme described in the article : *"Privacy-Preserving Aggregation of Time Series Data"*, by Shi et al. and published at the conference NDSS 2011, as well as in the patent document EP 2 485 430. Indeed, such a scheme enables *n* users/participants ($n \geq 1$) to provide encrypted data on which the untrusted data aggregator is able to determine the sum or the mean of the unencrypted data without decrypting individual inputs (instead of the mean, it could also be possible to determine the variance; in that case, users have to encrypt the square of the plaintexts). Such scheme has a formal security proof in view of a security game depicted in said article, assuming that the Decisional Diffie Hellman problem is hard in the group in which computation are performed. However, such security proof has a degradation factor in $O(Tn^3)$ as mentioned in the article "A Scalable Scheme for Privacy Preserving Aggregation of Time Series Data" by M. Joye et al., published in the proceedings of the conference FC 2013. In this article, the authors proposed a technique based on another security assumption (the composite residuosity assumption instead of the DDH assumption) in order to get rid of the in $O(n^3)$ degradation factor in the security proof. But, it is still an open problem to obtain an aggregator oblivious encryption scheme which relies on the DDH assumption (or a weaker assumption such as the Decision Linear assumption, or also, more generally, the k decision linear problem) and that has a security proof without a degradation factor in $O(Tn^3)$. The present invention provides a solution that fufill these requirements.

Summary of the invention

The present invention is directed to a method for determining a statistic value, for a given time period *t*, on a set of $n \geq 2$ of plaintext data $\{x_{i,t}\}_{1 \leq i \leq n}$ with $x_{i,t} \in \mathbb{Z}_p$ , *p* being a primer number, only based on a set of corresponding ciphertext data $\{c_{i,t} = E_{sk_i}(x_{i,t}, t)\}_{1 \leq i \leq n}$, where *E* is an encryption method and $sk_i$ an encryption key, without having access to all elements of the set of corresponding encryption key $\{sk_i\}_{1 \leq i \leq n}$. The method is implemented by an electronic device and is remarkable in that it comprises:

- a step of obtaining said given time period *t*, and said set of corresponding ciphertext data $\{c_{i,t} = E_{sk_i}(x_{i,t}, t)\}_{1 \leq i \leq n}$ for which $E_{sk_i}(x_{i,t}, t) = f(x_{i,t}) \prod_{j=1}^{k+1} H_j(t)^{s_{j,i}}$ where functions $H_1,...,H_{k+1}: \mathbb{Z} \to \mathbb{G}$ are hash functions, $\mathbb{G}$ is a group of prime order *q*, $k \geq 1$ and said encryption key $sk_i = \{s_{j,i}\}_{1 \leq j \leq k+1}$ which comprises (k + 1) random elements in $\mathbb{Z}/q\mathbb{Z}$ , and f is a function defined according to said statistic value, and having for codomain said group $\mathbb{G}$ ;

-a step of obtaining an aggregator private key $sk_0 = \{s_{j,0}\}_{1 \leq j \leq k+1} = \left\{-\sum_{i=1}^{n} s_{j,i} \bmod q \right\}_{1 \leq j \leq k+1}$ ;

-a step of determining said statistic value based on $sk_0$ and said set of corresponding ciphertext data $\{c_{i,t} = E_{sk_i}(x_{i,t}, t)\}_{1 \leq i \leq n}$.

Such method is secure in the random oracle model under the Decision Diffie-Hellman (DDH) assumption. Moreover, for such method, the gap between the adversary's advantage and the reduction's success probability does not depend on the number $n$ of users whatsoever, contrary to the technique introduced by Shi et al. previously mentioned. At last, such method is compatible with the use of elliptic curve subgroups so as to obtain shorter keys and ciphertexts.

The term "obtaining a value" means either computing the value or receiving the value from another device, or from a unit of said electronic device.

In a preferred embodiment, such method is used with $k = 1$.

In a preferred embodiment, the method is remarkable in that said function $f$ is a function defined by an equation

$f(x) = x^n$, where n is a real number, and said group $\mathbb{G}$ corresponds to $\mathbb{Z}_p$ .

In a preferred embodiment, the method is remarkable in that said function $f$ is a function defined by an equation

$$f(x) = g^{x^{n'}}$$ where $g \in \mathbb{G}$ is a random generator of said group $\mathbb{G}$ , and $n'$ is a natural number.

In a preferred embodiment, the method is remarkable in that n' is equal to one, and said statistic value corresponds to a sum of plaintexts associated to encrypted data, and in that said step of determining said statistic value comprises:

- a step of obtaining $V_t := \prod_{j=1}^{k+1} H_j(t)^{s_{j,0}} \cdot \prod_{i=1}^{n} c_{i,t} = g^{X_t};$ ;

- a step of determining the discrete logarithm of $V_t$ with regards to basis $g$.

In a preferred embodiment, the step of determining the discrete logarithm of $V_t$ comprises a step of executing a Pollard's kangaroo algorithm.

In another embodiment, the step of determining the discrete logarithm of $V_t$ comprises a step of executing an index calculus algorithm.

In another embodiment, the step of determining the discrete logarithm of $V_t$ comprises a step of executing a Pohlig-Hellman algorithm.

In a preferred embodiment, said plaintext data $\{x_{i,t}\}_{1 \leq i \leq n}$ correspond to data provided by a device belonging to a smart grid.

In another embodiment, said plaintext data $\{x_{i,t}\}_{1 \leq i \leq n}$ correspond to rating on films, or advertisements. In another embodiment, said plaintext data $\{x_{i,t}\}_{1 \leq i \leq n}$ correspond to metadata associated with images, films or sounds. These metadata corresponds to a response of a questionnaire on the content they are associated with. In another embodiment, said plaintext data $\{x_{i,t}\}_{1 \leq i \leq n}$ correspond to data obtained by smart meters (such as the ones used for measuring an electricity consumption, or a gas consumption or a water consumption).

According to an exemplary implementation, the different steps of the method are implemented by a computer software program or programs, this software program comprising software instructions designed to be executed by a data processor of a relay module according to the disclosure and being designed to control the execution of the different steps of this method.

Consequently, an aspect of the disclosure also concerns a program liable to be executed by a computer or by a data processor, this program comprising instructions to command the execution of the steps of a method as mentioned here above.

This program can use any programming language whatsoever and be in the form of a source code, object code or code that is intermediate between source code and object code, such as in a partially compiled form or in any other desirable form.

The disclosure also concerns an information medium readable by a data processor and comprising instructions of a program as mentioned here above.

The information medium can be any entity or device capable of storing the program. For example, the medium can comprise a storage means such as a ROM (which stands for *"Read Only Memory"*), for example a CD-ROM (which stands for *"Compact Disc - Read Only Memory"*) or a microelectronic circuit ROM or again a magnetic recording means, for example a floppy disk or a hard disk drive.

Furthermore, the information medium may be a transmissible carrier such as an electrical or optical signal that can be conveyed through an electrical or optical cable, by radio or by other means. The program can be especially downloaded into an Internet-type network.

Alternately, the information medium can be an integrated circuit into which the program is incorporated, the circuit being adapted to executing or being used in the execution of the method in question.

According to one embodiment, an embodiment of the disclosure is implemented by means of software and/or hardware components. From this viewpoint, the term "module" can correspond in this document both to a software component and to a hardware component or to a set of hardware and software components.

A software component corresponds to one or more computer programs, one or more subprograms of a program, or more generally to any element of a program or a software program capable of implementing a function or a set of functions according to what is described here below for the module concerned. One such software component is executed by a data processor of a physical entity (terminal, server, etc.) and is capable of accessing the hardware resources of this physical entity (memories, recording media, communications buses, input/output electronic boards, user interfaces, etc.).

Similarly, a hardware component corresponds to any element of a hardware unit capable of implementing a function or a set of functions according to what is described here below for the module concerned. It may be a programmable hardware component or a component with an integrated circuit for the execution of software, for example an integrated circuit, a smart card, a memory card, an electronic board for executing firmware etc.

In another embodiment, it is proposed an electronic device comprising means for determining a statistic value, for a given time period $t$, on a set of $n \geq 2$ of plaintext data $\{x_{i,t}\}_{1\leq i\leq n}$ with $x_{i,t} \in \mathbb{Z}_p$, $p$ being a primer number, only based on a set of corresponding ciphertext data $\{c_{i,t} = E_{sk_i}(x_{i,t}, t)\}_{1\leq i\leq n}$, where E is an encryption method and $sk_i$ an encryption key, without having access to all elements of the set of corresponding encryption key $\{sk_i\}_{1\leq i\leq n}$. The electronic device is remarkable in that it comprises :

- means for obtaining said given time period $t$, and said set of corresponding ciphertext data $\{c_{i,t} = E_{sk_i}\{x_{i,t}, t\}_{1\leq i\leq n}$ for which $E_{sk_i}(x_{i,t}, t) = f(x_{i,t}) \prod_{j=1}^{k+1} H_j(t)^{s_{j,i}}$ where functions $H_1,...,H_{k+1}: \mathbb{Z} \to \mathbb{G}$ are hash functions, $\mathbb{G}$ is a group of prime order q, $k \geq 1$ and said encryption key $sk_i = \{s_{j,i}\}_{1\leq j\leq k+1}$ which comprises (k + 1) random elements in $\mathbb{Z} / q\mathbb{Z}$, and $f$ is a function defined according to said statistic value, and having for codomain said group $\mathbb{G}$ ;

- means for obtaining an aggregator private key $sk_0 = \{s_{j,0}\}_{1\leq j\leq k+1} = \{-\sum_{i=1}^{n} s_{j,i} \bmod q\}_{1\leq j\leq k+1}$ ;

- means for determining said statistic value based on $sk_0$ and said set of corresponding ciphertext data $\{c_{i,t} = E_{ski}(x_{i,t}, t)\}_{1\leq i\leq n}$.

In another embodiment, the electronic device uses an element $k = 1$.

In another embodiment, the electronic device is remarkable in that said function f is a function defined by an equation $f(x) = x^n$, where n is a real number, and said group $\mathbb{G}$ corresponds to $\mathbb{Z}_p$.

In another embodiment, the electronic device is remarkable in that said function f is a function defined by an equation $f(x) = g^{x^{n'}}$ where $g \in \mathbb{G}$ is a random generator of said group $\mathbb{G}$, and $n'$ is a natural number.

In another embodiment, the electronic device is remarkable in that n' is equal to one, and said statistic value corresponds to a sum of plaintexts associated to encrypted data, and in that said means for determining said statistic value comprise:

- means for obtaining $V_t := \prod_{j=1}^{k+1} H_j(t)^{s_{j,0}} \cdot \prod_{i=1}^{n} c_{i,t} = g^{X_t}$ ;

- means for determining the discrete logarithm of $V_t$ with regards to basis $g$.

Brief description of the figures

The above and other aspects of the invention will become more apparent by the following detailed description of exemplary embodiments thereof with reference to the attached drawings in which:

Figures 1(a)-(c) present the main functions of an Aggregator-Oblivious Encryption scheme according to one embodiment of the invention;

Figure 2 presents an electronic device that can be used to perform one or several steps of the methods disclosed in the present document.

<u>Detailed description</u>

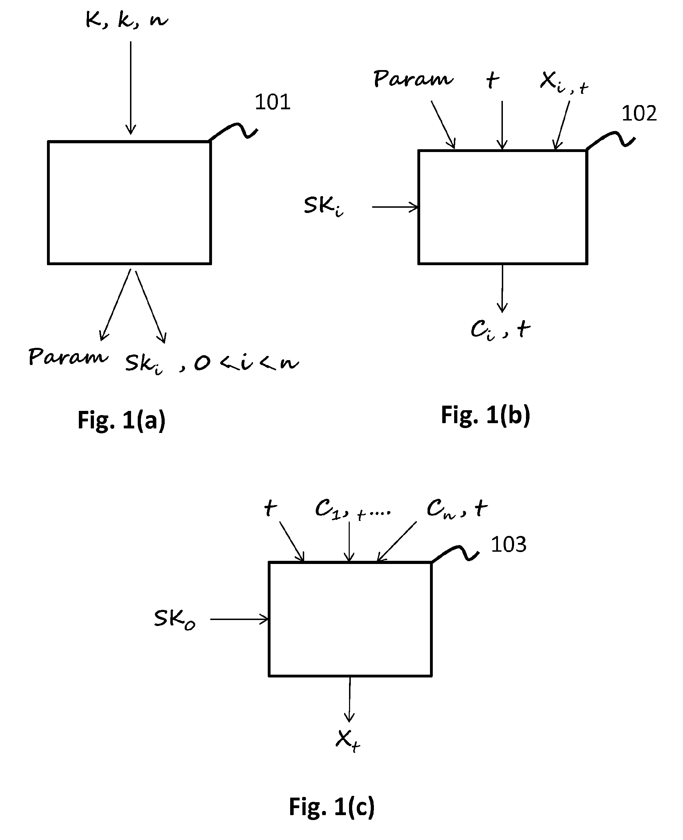

Figures 1(a)-(c) present the main functions of an aggregator-oblivious encryption scheme according to one embodiment of the invention.

Before describing these figures, and clarifying the scope of the present invention, some reminders for the reader should be done on aggregator-oblivious encryption scheme and also the corresponding security notion. We refer the reader to the article of Shi et al previously mentioned for further introductory background. Let's remark that aggregator-oblivious encryption scheme can be applied in the context of use of smart meters (such as the ones used for measuring an electricity consumption, or a gas consumption or a water consumption). In such case, a value to be encrypted by such aggregator-oblivious encryption scheme correspond to a measured data. For one skilled in the art, an Aggregator-Oblivious Encryption (AOE) scheme is a tuple of algorithms, (Setup; Enc; AggrDec), defined as:

**Setup($1^\kappa$)**: Given a security parameter $\kappa$, a trusted dealer generates the system parameters *param,* the aggregator's private key $sk_0$, and the private key $sk_i$ for each user i ($1 \leq i \leq n$);
**Enc(param, $sk_i$, t, $x_{i,t}$)**: At time period t, user i encrypts a value $x_{i,t}$ using his private key encryption key $sk_i$ to get $c_{i,t} = Enc(param, sk_i, x_{i,t})$.

**AggrDec(param, $sk_0$, t, $c_{1,t}$, ..., $c_{n,t}$)**: At time period t, the aggregator using $sk_0$ obtains $X_t = \sum_{i=1}^{n} x_{i,t}$ as $X_t = $ AggrDec(*param, $sk_0$, t, $c_{1,t}$, ..., $c_{n,t}$*)

Basically, the security notion of aggregator obliviousness (AO) requires that the aggregator cannot learn, for each time period, anything more than the aggregate value $X_t$ from the encrypted values of n (honest) users. If there are corrupted users (i.e. users sharing their private information with the aggregator), the notion only requires that the aggregator gets no extra information about the values of the honest users beyond their aggregate value. Furthermore, it is assumed that each user encrypts only one value per time period. More formally, AO is defined by the following game between a challenger and an attacker.

**Setup** The challenger runs the **Setup($1^\kappa$)** algorithm and gives *param* to the attacker.

**Queries** In a first phase, the attacker can submit queries that are answered by the challenger.

The attacker can make two types of queries:

1. <u>Encryption queries:</u> The attacker submits ($i, t, x_{i,t}$) for a pair ($i, t$) and gets back the encryption of $x_{i,t}$ under key $sk_i$ for a time period $t$;
2. <u>Compromise queries:</u> The attacker submits $i$ and receives the private key $sk_i$ of user i; if i = 0, the attacker receives the private key of the aggregator.

Challenge In a second phase, the attacker chooses a time period $t^*$. The attacker also chooses a subset S* $\subseteq$ {1, ...,$n$} and two different series of triples

$$\langle (i, t^*, x_{i,t^*}^{(0)}) \rangle_{i \in S^*} \text{ and } \langle (i, t^*, x_{i,t^*}^{(1)}) \rangle_{i \in S^*}.$$

that are given to the challenger.

The challenger chooses at random a bit $b \in$ {0,1} and returns the encryption of $\langle x_{i,t^*}^{(b)} \rangle_{i \in S^*}$ to the attacker.

**More queries: The attacker can make more encryption and compromise queries. Let** $U^* \subseteq$ {1, ..., $n$} be the whole set of users for which, at the end of the game, no encryption queries have been made on time period $t^*$ and no compromise queries have been made. If the aggregator capability $sk_0$ is compromised at the end of the game and $S^*=U^*$, it is required that $\sum_{i \in S^*} x_{i,t^*}^{(0)} = \sum_{i \in S^*} x_{i,t^*}^{(1)}$

**Outcome** At the end of the game, the attacker outputs a bit $b'$ and wins the game if and only if $b' = b$. As usual, A's advantage is defined to be

$$0 \leq Adv^{AO}(A) := \left| \Pr(b = b') - \frac{1}{2} \right| \leq 1/2$$

Let's remark that in the "More queries" phase, since $S^* \subseteq U^*$, the attacker cannot submit an encryption query $(i, t^*,.)$ with $i \in S^*$ or a compromise query $i$ with $i \in S^*$.

So, the following definition concerning the security of an AO can be established: an encryption scheme is said to meet the AO security notion if no probabilistic polynomial-time attacker can guess correctly in the above game the bit $b$ with a probability non-negligibly better (in the security parameter) than 1/2. The probability is taken over the random coins of the game according to the distribution induced by Setup and over the random coins of the attacker.

We also remind the reader with the different algorithm assumptions on which the present invention relies on.

We consider a group $\mathbb{G}$ of prime order $p > 2^\lambda$ where $\lambda$ is the security parameter, over which the discrete logarithm problem is presumably hard. In these groups, we rely on the following hardness assumptions.

In a group $\mathbb{G}$, the Decision Diffie Hellman (DDH) problem is to distinguish the distributions $(g, g^a, g^b, g^{ab}) \in \mathbb{G}^4$ and $(g, g^a, g^b, g^z) \in$, with $a, b \xleftarrow{R} \mathbb{Z}_p^*$ and $z \xleftarrow{R} \mathbb{Z}_p^*$.

It is known that the DDH fails to hold in certain groups: examples include groups over which a bilinear map is efficiently computable. In these groups, it is common to rely on the Decision Linear assumption, which is believed to be strictly weaker than DDH. While DDH amounts to deciding whether two vectors of dimension two $(g, g^a)$ and $(g^b, g^c)$ are linearly dependent (which is the case when $c = ab$), the Decision Linear problem consists in solving the same problem for vectors of dimension three: given $(g^a, 1, g)(1, g^b, g)$ and $(g^{ac}, g^{bd}, g^z)$, the problem is to decide if $z = c + d$.

The Decision Linear Problem (DLIN) in $\mathbb{G}$, is to distinguish the distributions $(g^a, g^b, g^{ac}, g^{bd}, g^z) \in \mathbb{G}^5$ and $(g^a, g^b, g^{ac}, g^{bd}, g^z) \in \mathbb{G}^5$, with $a, b, c, d \xleftarrow{R} \mathbb{Z}_p^*$ and $z \xleftarrow{R} \mathbb{Z}_p^*$.

The DLIN assumption can be further weakened by increasing the dimension of the vectors. As pointed out in the article *"Cramer-Shoup Encryption Scheme from the Linear Assumption and from Progressively Weaker Linear Variants."* by H. Shacham, available on the Cryptology ePrint Archive (report 2007/074), and in the article *"Secure Hybrid Encryption from Weakened Key Encapsulation"* by D. Hofheinz et al., published in the proceedings of the conference Crypto'07, for k > 1, the k-linear assumption seems to hold (at least in the generic group model), even in the presence of an oracle that solves the (k-1)-linear problem.

The $k$-Linear Problem (k-LIN) in $\mathbb{G}$, is given group elements $g_1, ..., g_k, g \in_R \mathbb{G}$ and a vector $\vec{g}_{k+1} \in \mathbb{G}^{k+1}$, to decide whether $\vec{g}_{k+1} \in span(\vec{g}_1, ..., \vec{g}_k)$ or $\vec{g}_{k+1} \in \mathbb{G}^{k+1}$ where, for each $i \in \{1, ..., k\}$, $\vec{g}_i = (1_\mathbb{G}, ..., 1_\mathbb{G}, g_i, 1_\mathbb{G}, ..., 1_\mathbb{G}, g) = (g_i^{\vec{e}_i} \mid g) \in \mathbb{G}^{k+1}$ and $\vec{e}_i = (0, ..., 0, 1, 0, ..., 0)$ stands for the i-th unit vector of dimension k.

The 1-linear assumption corresponds to the DDH assumption while the 2-linear assumption is the DLIN assumption.

At last, for reminders, we detail the Aggregator-Oblivious Encryption (AOE) scheme that was proposed by Shi and al, in the previously mentioned paper that meets the AO security notion under the DDH assumption, in the random oracle model.

**Setup(1$^\kappa$)**: Let a group $\mathbb{G}$ of prime order q for which the DDH assumption holds, an let a random generator $g \in \mathbb{G}$. Let also a hash function H: $\mathbb{Z} \to \mathbb{G}$ viewed as a random oracle. Finally, let n random elements in $\mathbb{Z}$ / $q\mathbb{Z}$, $s_1, ..., s_n$ and defines $s_0 = -\sum_{i=1}^n s_i \bmod q$.

*Param* = {( $\mathbb{G}$, g, H}; the aggregator's private key is $s_0$ and user I's private key is $sk_i = s_i$ (for each user i (1 ≤ i ≤ n));

**Enc(param, $sk_i$, t, $x_{i,t}$)**: At time period t, user i encrypts a value $x_{i,t}$ using his private key encryption key $sk_i$ to get $c_{i,t}$.

**AggrDec(param, $sk_0$, t, $c_{1,t}$, ..., $c_{n,t}$)**: At time period t, the aggregator using $sk_0$ obtains $X_t$ by first computing $V_t := H(t)^{s_0} \prod_{i=1}^n c_{i,t} = g^{X_t}$, and next the discrete logarithm of $V_t$ w.r.t. basis $g$.

Let's remark that, since $g$ has order q, note that the so-obtained value for $X_t$ is defined modulo $q$.

However, as already mentioned, the security reduction of the AOE scheme proposed by Shi et al. is very loose as, if the scheme is set up for $n$ users, there is a multiplicative gap of $O(Tn^3)$ between the adversary's advantage and the reduction's probability to solve the DDH problem.

Let's describe the figures 1(a)-(c) which discloses an AOE scheme which does not have such multiplicative gap of $O(Tn^3)$, and that relies on the K-LIN assumption.

The function **Setup(1$^\kappa$)**, referenced 101, takes as input a security parameter $\kappa$ as well as an integer $k \geq 1$. Let a group $\mathbb{G}$ of prime order q for which the $k$-LIN assumption holds, an let a random generator $g \in \mathbb{G}$ . Let also hash functions $H_1,...,H_{k+1}: \mathbb{Z} \to \mathbb{G}$ that will be viewed as random oracles in the security analysis. Finally, let $(k+1)n$ random elements in $\mathbb{Z} / q\mathbb{Z}$ , $\{s_{j,1}, ..., s_{j,n}\}_{j \in \{1,...,k+1\}}$, and define $s_{j,0} = -\sum_{i=1}^{n} s_{j,i} \ mod \ q$ for each j ∈ {1, ..., k + 1}.

The function 101 outputs the following elements: $Param = \left\{(q, \mathbb{G}, g, (H_j)_{j=1}^{k+1}\right\}$; and the private keys $sk_i$ = $\{s_{j,i}\}_{1 \leq j \leq k+1}$, ($i(0 \leq i \leq$ n)) that are then securely transmitted.

The function **Enc(param, $sk_i$, $t$, $x_{i,t}$)**, referenced 102, enables, for a given time period t, a user i to encrypt a value $x_{i,t}$ using his private key $sk_i$ to get $c_{i,t}$ .

The function AggrDec(param, $sk_0$, $t$, $c_{1,t}$, ..., $c_{n,t}$), referenced 103, enables, for a given time period t, an aggregator, using its private key $sk_0$, to obtain the following value $X_t = \sum_{i=1}^{n} x_{i,t}$ by first computing

$$V_t := \prod_{j=1}^{k+1} H_j(t)^{s_{j,0}} \cdot \prod_{i=1}^{n} c_{i,t} = g^{X_t},$$ and next computing the discrete logarithm of $V_t$ with regards to the basis $g$.

Let's remark that since $g$ has order $q$, the so-obtained value for $X_t$ is defined modulo $q$. It should be also noted that such scheme supports only polynomial-sized plaintext spaces for computing sums. In applications like power consumption measurements, $X_t$ is likely to fit within 30 bits, in which case the discrete logarithm computation is fairly fast.

For known groups satisfying Shi et al.'s setting (i.e., prime-order DDH groups), the most appropriate method is Pollard's $\lambda$ algorithm (or variants thereof described in the article "Computing Small Discrete Logarithms Faster", by D. Bernstein et al., published in the Cryptology Eprint Archive (report 2012/458)) and requires that the range of $X_t$ is small.

In another embodiment, instead of the sum, a statistic related to a product can be obtained. In such case, instead of obtaining the following value $c_{i,t}$ in the function 102, the following value is obtained

$$c_{i,t} = x_{i,t} \prod_{j=1}^{k+1} H_j(t)^{s_{j,i}}.$$ In such case, the scheme does not have a restriction of the size of the data $x_{i,t}$ as the one where the value $g^{x_{i,t}}$ must be computed.

The security of the following scheme can be proven under the K-LIN assumption in the random oracle model (i.e., the scheme provides AO security under the K-LIN assumption in the random oracle model). Namely, for any probabilistic polynomial-time adversary A, there exists a k-LIN distinguisher B with comparable running time and such that:

$$Adv^{AO}(A) \leq e.(q_{enc} + 1)Adv^{k-LIN}(B)$$

where e is the base for the natural logarithm and $q_{enc}$ denotes the number of encryption queries made for distinct periods other than $t^*$.

We remark that, if $T \in \mathbb{N}$ denotes the maximal number of time periods, we always have $q_{enc} \leq T$ - 1 (namely, queries made by distinct users during the same period are only counted once) so that the tightness of the reduction does not depend on the number of users n.

At last, increasing the value of k allows relying on a seemingly weaker assumption (since the $k$-linear assumption with $k > 1$ is believed to resist in groups equipped with a DDH distinguisher) without increasing the length of ciphertexts: only the size of private keys and the number of exponentiations are affected by $k$.

When k =$1$, this embodiment of the invention can be written as follows:

**Setup(1$^\kappa$)**: Let a group $\mathbb{G}$ of prime order q for which the DDH assumption holds, an let a random generator $g \in \mathbb{G}$ . Let also two hash functions $H_1: \mathbb{Z} \to \mathbb{G}$ and $H_2: \mathbb{Z} \to \mathbb{G}$ that will be viewed as random oracles in the security analysis. Finally, let $2n$ random elements in $\mathbb{Z} / q\mathbb{Z}$ , $s_1, ..., s_n, t_1,..., t_n$ and defines $s_0 = -\sum_{i=1}^{n} s_i \ mod \ q$ as well as $t_0 = -\sum_{i=1}^{n} t_i \bmod q.$

*Param* = {(q, $\mathbb{G}$ ,g,$H_1$,$H_2$}; the aggregator's private key corresponds to ($s_0$, $t_0$), whereas the private key of user i is $sk_i$ = ($s_i$, $t_i$), (for each user i ($1 \le i \le n$));

**Enc(param, $sk_i$, t, $x_{i,t}$):** At time period t, user i encrypts a value $x_{i,t} \in \mathbb{Z}$ / $q\mathbb{Z}$ using his private key $sk_i$ to get $c_{i,t} = g^{x_{i,t}}H_1(t)^{s_i}H_2(t)^{t_i}.$

AggrDec(param, $sk_0$, t, $c_{1,t}$ ..., $c_{n,t}$): At time period t, the aggregator using $sk_0$ obtains $X_t = \sum_{i=1}^{n} x_{i,t}$ by first computing $V_t := H_1(t)^{s_0} H_2(t)^{t_0} \prod_{i=1}^{n} c_{i,t} = g^{X_t},$ and next the discrete logarithm of $V_t$ with regards to the basis *g*.

This embodiment uses fewer operations, and is faster to be executed on electronic devices with small resources. This embodiment has the shortest private keys as well as the fastest and aggregate decryption operations among all construction with tighter security reductions.

In another embodiment, the data/values that are encrypted by an aggregator-oblivious encryption scheme according to the invention, as previously described, are noisy data/values as in the article *"Privacy-Preserving Aggregation of Time Series Data"* already mentioned. Indeed, the sum of the masking values (or noise values) that are added to the measurements data corresponds to a known value, and can be deleted later.

In another embodiment, the present technique can be turned out into a fault tolerant aggregator-oblivious encryption scheme as proposed in the article : *"Privacy-Preserving Stream Aggregation with Fault Tolerance"* by T. H. Hubert Chan, et al., published in the proceedings of the conference Financial Cryptography 2012. Indeed, in this article, a technique to turn the Shi et al. construction into a fault-tolerant system is described, and can therefore be applied to the present invention.

In another embodiment, the proposed technique that comprises the use of at least two hash functions and vectors of at least two coordinates for defining the private key of a participant/user can be used in other context, such as in the design of adaptively secure threshold signatures schemes.

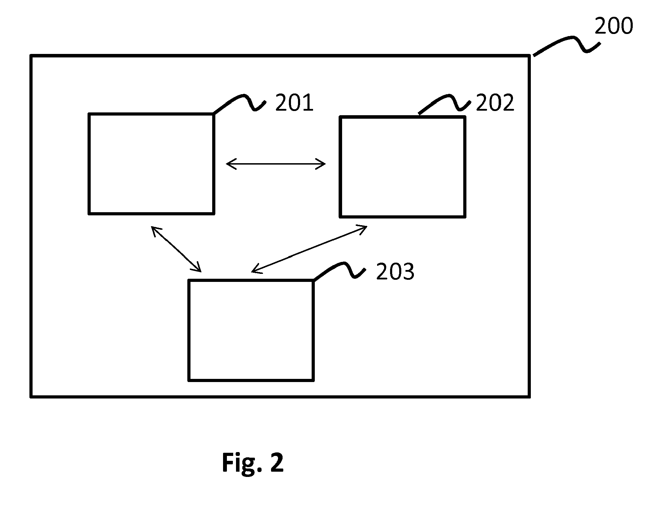

Figure 2 presents an electronic device that can be used to perform one or several steps of the methods disclosed in the present document.

Such device referenced 200 comprise a computing unit (for example a CPU, for *"Central Processing Unit"*), referenced 201, and one or several memory units (for example a RAM (for *"Random Access Memory"*) block in which intermediate results can be stored temporarily during the execution of instructions a computer program, or a ROM (*"Read Only Memory"*) block in which, among other things, computer programs are stored, or an EEPROM (*"Electrically-Erasable Programmable Read-Only Memory"*) block, or a flash block) referenced 202. Computer programs are made of instructions that can be executed by the computing unit. Such device 200 can also comprise a dedicated unit, referenced 203, constituting an input-output interface to allow the device 200 to communicate with other devices. In particular, this dedicated unit 203 can be connected with an antenna (in order to perform communication without contacts), or with serial ports (to carry communications "contact"). Let's remark that the arrows in Figure 2 means that the linked unit can exchange data through buses for example together.

In an alternative embodiment, some or all of the steps of the method previously described, can be implemented in hardware in a programmable FPGA (*"Field Programmable Gate Array"*) component or ASIC (*"Application-Specific Integrated Circuit"*) component.

In an alternative embodiment, some or all of the steps of the method previously described, can be executed on an electronic device comprising memory units and processing units as the one disclosed in the Figure 2.

**Claims**

1. Method for determining a statistic value, for a given time period *t*, on a set of $n \ge 2$ of plaintext data $\{x_{i,t}\}_{1 \le i \le n}$ with $x_{i,t} \in \mathbb{Z}_p$ , *p* being a primer number, only based on a set of corresponding ciphertext data $\{c_{i,t} = E_{sk_i}(x_{i,t}, t)\}_{1 \le i \le n}$, where *E* is an encryption method and $sk_i$ an encryption key, without having access to all elements of the set of corresponding encryption key $\{sk_i\}_{1 \le i \le n}$, said method being implemented by an electronic device and being **characterized in that** it comprises :

   - a step of obtaining said given time period *t*, and said set of corresponding ciphertext data $\{c_{i,t} = E_{sk_i}(x_{i,t}, t)\}_{1 \le i \le n}$

for which $E_{sk_i}(x_{i,t}, t) = f(x_{i,t}) \prod_{j=1}^{k+1} H_j(t)^{s_{j,i}}$ where functions $H_1, ..., H_{k+1}: \mathbb{Z} \to \mathbb{G}$ are hash functions, $\mathbb{G}$ is a group of prime order q, $k \geq 1$ and said encryption key $sk_i = \{s_{j,i}\}_{1 \leq j \leq k+1}$ which comprises (k + 1) random elements in $\mathbb{Z} / q\mathbb{Z}$, and f is a function defined according to said statistic value, and having for codomain said group $\mathbb{G}$ ;

- a step of obtaining an aggregator private key $sk_0 = \{s_{j,0}\}_{1 \leq j \leq k+1} = \{-\sum_{i=1}^{n} s_{j,i} \bmod q\}_{1 \leq j \leq k+1}$ ;

- a step of determining said statistic value based on $sk_0$ and said set of corresponding ciphertext data $\{c_{i,t} = E_{sk_i}(x_{i,t}, t)\}_{1 \leq i \leq n}$.

2.  Method according to claim 1, **characterized in that** $k$ = 1.

3.  Method according to any claims 1 to 2, **characterized in that** said function $f$ is a function defined by an equation $f(x) = x^n$, where n is a real number, and said group $\mathbb{G}$ corresponds to $\mathbb{Z}_p$ .

4.  Method according to any claims 1 to 2, **characterized in that** said function f is a function defined by an equation

$$f(x) = g^{x^{n'}}$$ where $g \in \mathbb{G}$ is a random generator of said group $\mathbb{G}$ , and n' is a natural number.

5.  Method according to claim 4, **characterized in that** n' is equal to one, and said statistic value corresponds to a sum of plaintexts associated to encrypted data, and **in that** said step of determining said statistic value comprises:

- a step of obtaining $V_t := \prod_{j=1}^{k+1} H_j(t)^{s_{j,0}} . \prod_{i=1}^{n} c_{i,t} = g^{X_t}$;

- a step of determining the discrete logarithm of $V_t$ with regards to basis $g$.

6.  Method according to claim 5, **characterized in that** said step of determining the discrete logarithm of $V_t$ comprises a step of executing a Pollard's kangaroo algorithm.

7.  Method according to claim 5, **characterized in that** said step of determining the discrete logarithm of $V_t$ comprises a step of executing an index calculus algorithm.

8.  Method according to claim 5, **characterized in that** said step of determining the discrete logarithm of $V_t$ comprises a step of executing a Pohlig-Hellman algorithm.

9.  Method according to any claims 1 to 8, **characterized in that** said plaintext data $\{x_{i,t}\}_{1 \leq i \leq n}$ correspond to data provided by a device belonging to a smart grid.

10. Electronic device comprising means for determining a statistic value, for a given time period $t$, on a set of $n \geq 2$ of plaintext data $\{x_{i,t}\}_{1 \leq i \leq n}$ with $x_{i,t} \in \mathbb{Z}_p$ , p being a primer number, only based on a set of corresponding ciphertext data $\{c_{i,t} = E_{sk_i}(x_{i,t}, t)\}_{1 \leq i \leq n}$, where $E$ is an encryption method and $sk_i$ an encryption key, without having access to all elements of the set of corresponding encryption key $\{sk_i\}_{1 \leq i \leq n}$, said electronic device being **characterized in that** it comprises :

- means for obtaining said given time period $t$, and said set of corresponding ciphertext data $\{c_{i,t} = E_{sk_i}(x_{i,t}, t)\}_{1 \leq i \leq n}$

for which $E_{sk_i}(x_{i,t}, t) = f(x_{i,t}) \prod_{j=1}^{k+1} H_j(t)^{s_{j,i}}$ where functions $H_1,...,H_{k+1}: \mathbb{Z} \to \mathbb{G}$ are hash functions, $\mathbb{G}$ is a group of prime order q, $k \geq 1$ and said encryption key $sk_i = \{s_{j,i}\}_{1 \leq j \leq k+1}$ which comprises (k + 1) random elements in $\mathbb{Z} / q\mathbb{Z}$, and f is a function defined according to said statistic value, and having for codomain said group $\mathbb{G}$ ;

- means for obtaining an aggregator private key

$$sk_0 = \{s_{j,0}\}_{1 \leq j \leq k+1} = \{-\sum_{i=1}^{n} s_{j,i} \bmod q\}_{1 \leq j \leq k+1} ;$$

- means for determining said statistic value based on $sk_0$ and said set of corresponding ciphertext data $\{c_{i,t} =$

$E_{skl}(x_{i,t}, t)\}_{1 \le i \le n}$.

**11.** Electronic device according to claim 10, **characterized in that** $k = 1$.

**12.** Electronic device according to any claims 10 to 11, **characterized in that** said function $f$ is a function defined by an equation $f(x) = x^n$, where n is a real number, and said group $\mathbb{G}$ corresponds to $\mathbb{Z}_p$.

**13.** Electronic device according to any claims 10 to 11, **characterized in that** said function $f$ is a function defined by an equation $f(x) = g^{x^{n'}}$ where $g \in \mathbb{G}$ is a random generator of said group $\mathbb{G}$, and n' is a natural number.

**14.** Electronic device according to claim 13, **characterized in that** n' is equal to one, and said statistic value corresponds to a sum of plaintexts associated to encrypted data, and **in that** said means for determining said statistic value comprise:

- means for obtaining $V_t := \prod_{j=1}^{k+1} H_j(t)^{s_{j,0}} \cdot \prod_{i=1}^{n} c_{i,t} = g^{X_t}$;
- means for determining the discrete logarithm of $V_t$ with regards to basis $g$.

$K, k, n$

101

Param $sk_i$, $0 < i < n$

**Fig. 1(a)**

Param $t$ $X_{i,t}$

102

$SK_i$

$C_i, t$

**Fig. 1(b)**

$t$ $C_1, t \ldots$ $C_n, t$

103

$SK_0$

$X_t$

**Fig. 1(c)**

**Fig. 2**

| | Europäisches Patentamt European Patent Office Office européen des brevets | **EUROPEAN SEARCH REPORT** | Application Number EP 13 30 6642 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JOYE MARC ET AL BASU SAMIK SBASUIOTAASTATE EDU IOWA STATE UNIVERSITY DEPARTMENT OF COMPUTER SCIENCE 210 ATANASOFF HALL 50011 AMES: "A Scalable Scheme for Privacy-Preserving Aggregation of Time-Series Data", 1 April 2013 (2013-04-01), RADIO FREQUENCY IDENTIFICATION; [LECTURE NOTES IN COMPUTER SCIENCE], SPRINGER BERLIN HEIDELBERG, BERLIN, HEIDELBERG, PAGE(S) 111 - 125, XP047037658, ISSN: 0302-9743 ISBN: 978-3-642-45339-7 * page 117 - page 119 * ----- | 1-14 | INV. H04L9/30 H04L9/00 |
| Y | HOVAV SHACHAM: "A Cramer-Shoup Encryption Scheme from the Linear Assumption and from Progressively Weaker Linear Variants", INTERNATIONAL ASSOCIATION FOR CRYPTOLOGIC RESEARCH,, vol. 20090423:010226, 23 April 2009 (2009-04-23), pages 1-23, XP061002601, [retrieved on 2009-04-23] * page 12 - page 13 * ----- | 1-14 | |
| | | | TECHNICAL FIELDS SEARCHED (IPC) H04L |

The present search report has been drawn up for all claims

| Place of search | Date of completion of the search | Examiner |
|---|---|---|
| Munich | 8 August 2014 | Apostolescu, Radu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2485430 A

**Non-patent literature cited in the description**

- **SHI et al.** Privacy-Preserving Aggregation of Time Series Data. *conference NDSS,* 2011
- **M. JOYE et al.** A Scalable Scheme for Privacy Preserving Aggregation of Time Series Data. *proceedings of the conference FC,* 2013
- **H. SHACHAM.** Cramer-Shoup Encryption Scheme from the Linear Assumption and from Progressively Weaker Linear Variants. *Cryptology ePrint Archive*
- **D. HOFHEINZ et al.** Secure Hybrid Encryption from Weakened Key Encapsulation. *proceedings of the conference Crypto'07*
- **D. BERNSTEIN et al.** Computing Small Discrete Logarithms Faster. *Cryptology Eprint Archive*
- Privacy-Preserving Aggregation of Time Series Data. *Indeed*
- **T. H. HUBERT CHAN et al.** Privacy-Preserving Stream Aggregation with Fault Tolerance. *proceedings of the conference Financial Cryptography,* 2012